# EUROPÄISCHE PATENTSCHRIFT

(11) **EP 2 946 135 B1**
(45) Veröffentlichungstag und Bekanntmachung des Hinweises auf die Patenterteilung: **29.08.2018**
(21) Anmeldenummer: 14700057.4
(22) Anmeldetag: 03.01.2014
(51) Int. Cl.: F16L 23/00, F16L 23/02, F16L 23/16, F16L 37/086, F16L 29/04, F16L 55/10

(54) **NOTTRENNKUPPLUNG**
EMERGENCY RELEASE COUPLING
RACCORD À SÉPARATION DE SÛRETÉ

(30) Priorität: 17.01.2013 DE 102013100483
(43) Veröffentlichungstag der Anmeldung: 25.11.2015
(73) Patentinhaber: Von Keitz, Andreas, 65582 Diez (DE)
(72) Erfinder: Von Keitz, Andreas, 65582 Diez (DE)
(74) Vertreter: Blumbach · Zinngrebe Patent- und Rechtsanwälte
(86) Internationale Anmeldenummer: PCT/EP2014/050050
(87) Internationale Veröffentlichungsnummer: WO 2014/111278

(56) Entgegenhaltungen:
- EP-A1- 0 517 127
- DE-A1-102005 006 088
- DE-A1-102005 011 601
- US-A- 1 369 304

## Beschreibung

Die Erfindung bezieht sich auf eine Kupplungsvorrichtung als Nottrennsicherung zwischen zwei Förderleitungen, die mit Fluidsperren zum Schließen der Leitungen im Falle der gewaltsamen Trennung versehen sind.

Förderleitungen werden gewöhnlich über betätigbare Kupplungen miteinander verbunden, um beispielsweise eine Fluidladung von einem Tank abziehen zu können oder eine Fluidladung in den den Tank abgeben zu können und werden danach voneinander getrennt. Solche betätigbaren Kupplungsvorrichtungen werden miteinander verriegelt, wenn der gebildete Leitungszug zur Fluidförderung genutzt wird.

In der Praxis ist häufig der Fall anzutreffen, dass die eine Kupplungshälfte ortsfest und die andere Kupplungshälfte mit einen Fahrzeug verbunden, d.h. beweglich angeordnet ist. "Fahrzeug" ist hier im allerweitesten Sinn zu verstehen und umfasst auch Waggons, Schiffe oder Flugzeuge. Wenn sich das Fahrzeug während der Ladungsübernahme bewegt, kann es vorkommen, dass die betätigbare Kupplung oder der Leitungszug auseinander gerissen und damit zerstört wird.

Um solche Zerstörungen zu vermeiden, wird in der Praxis eine Nottrennsicherung angewandt, die bei Auftreten einer vorbestimmten Zugkraft auf die Leitung ausgelöst wird oder es wird eine Sollbruchstelle durchtrennt, bevor es zu einer Schädigung im Leitungszug kommt.

Eine Not-Trenn-Sicherheitskupplung nach dem Oberbegriff des Anspruchs 1 ist aus der DE 91 14 005 U1 = EP 0517 127 A1 bekannt. Die beiden Kupplungshälften werden über Halteringabschnitte zusammengehalten, die von außen in Ringnuten von Anschlussrändern der Kupplungshälften eingreifen und ihrerseits über zweiarmige Stützhebel gestützt werden, die unter Druckfederspannung stehen. Wenn auf die beiden Kupplungshälften ein zu großer Zug ausgeübt wird, lösen sich die Halteringabschnitte gegen die Kraft der Druckfedern an den Stützhebeln, indem die Halteringabschnitte durch Keilkräfte radial nach außen gepresst werden. Hier besteht jedoch die Gefahr der Klemmung.

Die DE 10 2005 011 601 A1 beschreibt eine Abreißkupplung mit einem Sicherungssystem zum Verbinden und Lösen der Kupplungshälften. Drei über den Umfang der Abreißkupplung verteilt angeordnete zweiarmige Hebel werden an ihren jeweiligen kürzeren Hebelarmen durch einen Stützring gestützt, wobei ihre längeren Hebelarme Endflansche der Kupplung umgreifen und die Kupplung in der Kupplungsstellung halten. Zur Einstellung der Stützkraft bevor die Kupplung ausgelöst wird, sind Stellschrauben an dem Stützring vorgesehen, die an den kürzeren Hebelarmen der jeweiligen zweiarmigen Hebel angreifen. Die Kupplung kann durch Ziehen an einem Seil ausgelöst werden, indem der Stützring aus seiner stützenden Stellung von den kürzeren Hebelarmen der Hebel weggezogen wird.

Der Erfindung liegt die Aufgabe zugrunde, eine Nottrennkupplung anzugeben, die relativ kompakt ausgebildet ist und eine Einstellung der Trennkraft ermöglicht.

Die gestellte Aufgabe wird bei einer Nottrennkupplung mit den Merkmalen des Anspruches 1 gelöst.

Die Nottrennkupplung umfasst zwei Kupplungshälften, die jeweils Leitungsenden mit selbstschließenden Fluidsperren enthalten, die beim Kuppeln aufgehoben werden, also den Durchgang von Fluid durch die miteinander gekuppelten Leitungen ermöglichen. Jede Kupplungshälfte weist einen Endflansch oder Bund mit Dichtfläche auf, die bei gekuppelten Kupplungshälften dichtend aufeinander liegen. Die eine Kupplungshälfte weist zwei oder mehrere mit zwei Schwenkstellen zusammenarbeitende Rasthebel auf, die in jeweiligen radialen Ebenen relativ zu den Kupplungshälften schwenkbar sind und ungleich lange Hebelarme aufweisen. Die langen Hebelarme stehen jeweils unter der Wirkung einer zugehörigen Druckfeder und die kürzen Hebelarme sind mit Rastnasen ausgebildet, die an Schrägflächen der anderen Kupplungshälfte angreifen, wenn die Kupplungshälften miteinander gekuppelt sind. Die Anliegekraft wird durch die zugehörige Druckfeder bestimmt und ist somit wählbar. Wenn im Kupplungszustand auf die Kupplungsvorrichtung eine Zugkraft ausgeübt wird, die das durch die Druckfedern bestimmte Maß überschreitet, wird der kürzere Hebel mit Rastnase in Öffnungsrichtung der Kupplungsvorrichtung geschwenkt und die Kupplungsverbindung wird freigegeben. Die Fluidsperren schließen sich bei diesem Vorgang selbsttätig.

Nach einer vorteilhaften Ausgestaltung der Erfindung sind die mit Dichtflächen versehenen Endflansche oder Bunde an ihrem Außenumfang mit Schrägflächen versehen, um die der kurze Hebelarm mit der Rastnase herumgreift.

Die Kupplungshälfte mit den Rasthebeln weist vorteilhaft einen Gehäuseflansch mit radialen Führungen für die Enden der längeren Hebelarme der Rasthebel auf. Die Führungen können als Führungsschlitze ausgebildet sein, die in Aussparungen im Gehäuseflansch hineinführen, in denen die Druckfedern der Hebel angeordnet sind. Die Kupplungshälfte mit den Rasthebeln kann ein ringförmiges Gehäuseteil aufweisen, das die Rasthebel im Bereich deren Schwenkflächen stützt und abdeckt. Das ringförmige Gehäuseteil ist zweckmäßig über achsparallele Streben mit dem Gehäuseflansch oder mit dem Körper des Gehäuses verbunden und dient zur Bildung einer der Schwenkstellen der Rasthebel, die die Abstützpunkte der Rasthebel beim Zusammenhalt der beiden Kupplungshälften bilden. Diese Schwenkstellen werden zweckmäßig als Frontflächen von Stellschrauben ausgebildet, um als Montagehilfe die längeren Hebelarme der Rasthebel niederzudrücken und so die kürzen Hebelarme mit den Rastnasen radial nach außen zu schwenken, wodurch ein sich öffnendes Kupplungsmaul dargeboten wird. In diesen Öffnungszustand kann der Kupplungspartner in Kupplungsposition gebracht werden, wonach die Stellschrauben radial nach außen verstellt werden, um das Kupplungsmaul zu schließen und den Kupplungseingriff zu vervollständigen.

Ein Ausführungsbeispiel der Erfindung wird anhand der Zeichnung beschrieben. Dabei zeigt:
Fig. 1 eine Nottrennkupplung im gekuppelten Zustand, längs aufgeschnitten, und
Fig. 2 die Kupplungsvorrichtung im gelösten Zustand.

Die Nottrennkupplung enthält eine erste Kupplungshälfte 1 und eine zweite Kupplungshälfte 2, welche die jeweiligen Enden von nicht dargestellten Leitungen, beispielsweise Schläuche, bilden. Jede Kupplungshälfte weist ein rohrförmiges Gehäuse 10 bzw. 20 auf, die an den sich gegenüberstehenden Enden mit je einem Endflansch oder Bund 11 bzw. 21 versehen sind. Um im Betrieb gegenseitig abzudichten, ist eine Zentrier- und Abdichteinrichtung 8 vorgesehen, die seitens des Flansches 11 eine Aussparung 81 und seitens des Flansches 21 einen Fortsatz 82 umfasst. Die Aussparung 81 und der Fortsatz 82 weisen jeweils eine umlaufende Konusfläche auf, die aufeinander passen, um die Flansche oder Bunde 11, 21 und damit die Gehäuse 10, 20 beim Zusammenbau der Kupplungshälften 1,2 zu zentrieren. In dem verbleibenden Zwischenraum zwischen Fortsatz 82 und Aussparung 81 ist eine Dichtung 80, beispielsweise ein O-Ring oder einen Spreizdichtung eingefügt, die mit einer axialen Fläche des Fortsatzes 82 anliegt, um die Gehäuse 10,20 gegeneinander abzudichten. Der Endflansch oder Bund 21 weist ferner an seinem radialen Umfang eine oder mehrere Schrägflächen 21a auf, die aus einer umlaufenden Konusfläche oder auch aus einzelnen Ringsegmentstücken bestehen können. Der Endflansch oder Bund 11 kann hinsichtlich der Gestaltung mit Schrägflächen symmetrisch zum Endflansch oder Bund 21 ausgebildet sein, d.h. eine Schrägfläche 11a aufweisen.

Die jeweiligen Kupplungsgehäuse 10 bzw. 20 können beispielsweise an ihren Enden mit Anschlussflanschen 12 bzw. 22 versehen sein, um die weiterführenden Leitungen anzuschließen. Die Anschlussflansche 12 bzw. 22 tragen Ösen 13 bzw. 23 die zueinander fluchtend ausgerichtet werden können, um Stangen mit Spanngewinde hindurchzuführen, was beim Zusammenbau der Nottrennkupplung nützlich ist.

Die Kupplungshälfte 1 umfasst noch einen Gehäuseflansch 14, der mit einer Reihe von radial ausgerichteten Gehäuseaussparungen 15 versehen ist, die über Schlitze 16 nach außen münden. Entsprechend der Anzahl der Aussparungen 15 bzw. der Schlitze 16 sind mehrere zweiarmige Rasthebel 3 vorgesehen, die sich in Längsrichtung der Nottrennkupplung mit leichter Neigung nach innen erstrecken. Jeder zweiarmige Rasthebel 3 weist eine Walzkörper-Schwenkfläche 30, einen längeren Hebelarm 31 und einen kürzeren Hebelarm 32 auf. Der kürzere Hebelarm 32 ist mit einer Rastnase 32a versehen, dessen Form der Schrägfläche 21a des Endflansches 21 angepasst ist. Das Ende des längeren Hebelarms 31 ist in einem zugehörigen Gehäuse 10 oder Schlitz 16 geführt und steht unter der Wirkung einer Druckfeder 4, die den jeweiligen Hebel 3 zum Eingriff der Rastnase 32a an der Schrägfläche 21a bringt. Dies erfolgt durch radiale Abstützung an Schwenkpunkten 5, die im Inneren eines ringförmigen Gehäuseteils 17 angebracht sind. Die Hebel 3 sind symmetrisch um den Umfang der Nottrennkupplung verteilt angeordnet und in Schließrichtung vorgespannt. Dadurch gelangen die jeweiligen Walzkörper-Schwenkflächen 30 in zugeordnete Lagermulden bei der Schrägfläche 11a. Da die Vorspannung die Montage der Nottrennkupplung in den gekuppelten Zustand erschwert, sind die Schwenkpunkte 5 als die Frontflächen von Stellschrauben 59 zum Niederdrücken der längeren Hebelarme 3 ausgebildet, wodurch sich das Kupplungsmaul, gebildet durch die kürzeren Hebelarme 32, öffnet und den Eintritt des Endflansches oder Bundes 21 der zweiten Kupplungshälfte 2 in das Kupplungsmaul erleichtert. Die Stellschrauben 50 werden im Übrigen in radialen Schraubbohrungen des ringförmigen Gehäuseteils 17 gehalten.

Zur Stützung der Hebel 3 nahe ihrer Schwenkfläche 30 ist das ringförmige Gehäuseteil 17 vorgesehen, das über Streben 18 mit dem Körper des mit dem Gehäuseflansch 14 verbunden ist und die Rasthebel 3 im Bereich ihrer Schwenkflächen 30 stützend umgibt. Zu diesem Zweck werden die Rasthebel 3 zwischen Schwenkfläche 30 und Rastnase 32a konform zu dem radialen Rand der aneinander liegenden Endflansche oder Bunde 11, 21 ausgebildet. Dieser radiale Rand weist zwei zueinander geneigte Schrägflächen 11a, 21a auf, die als Konusflächen ausgebildet sein können.

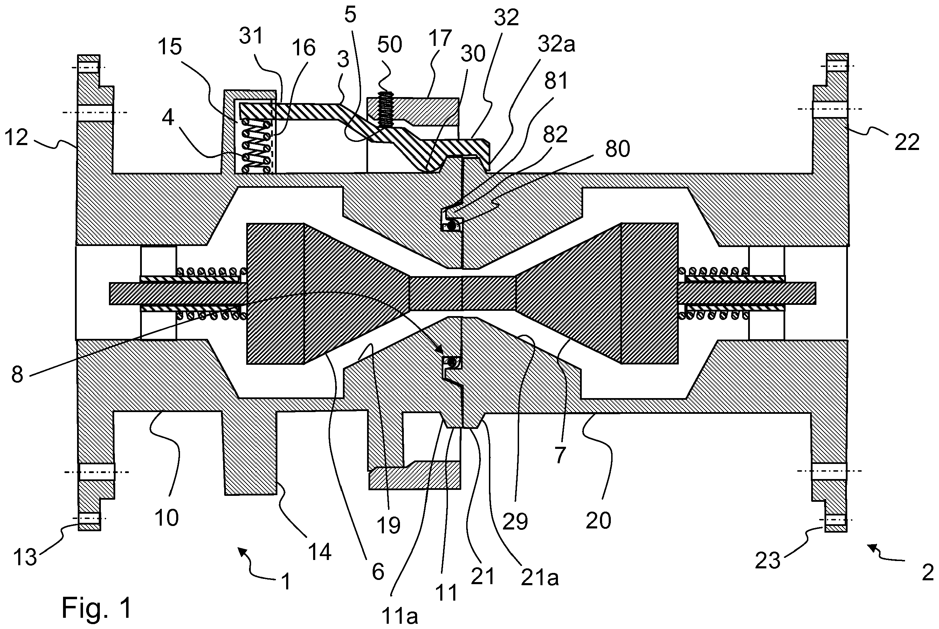

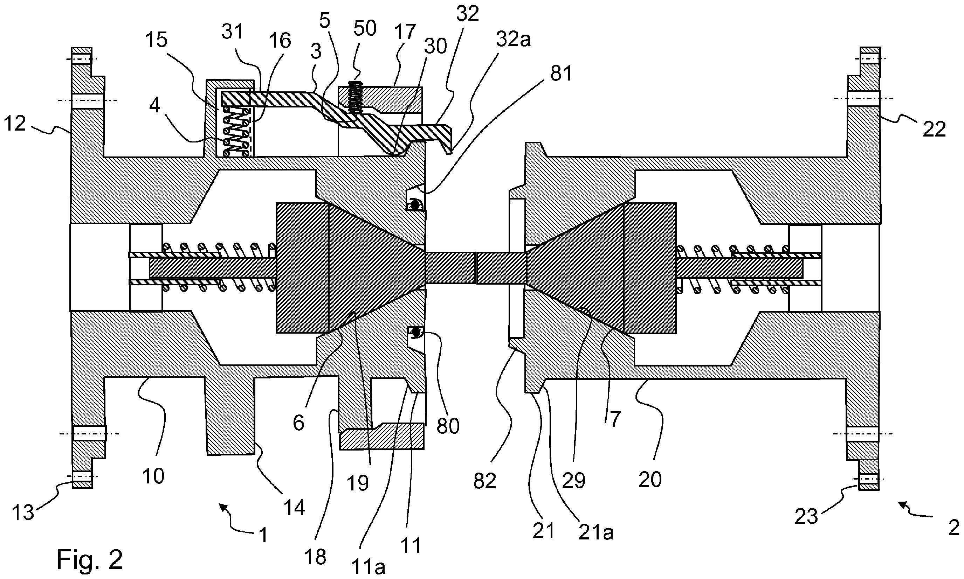

Das Innere der Gehäuse 10 bzw. 20 verjüngt sich zur Bildung von Anlagedichtflächen 19 bzw. 29, die mit kegelförmigen Fluidsperren 6 bzw. 7 zusammenarbeiten. Die Fluidsperren 6 bzw. 7 sind in Richtung ihrer Abdichtflächen 19 bzw. 29 federnd vorgespannt, wie es an sich bekannt ist und nicht näher beschrieben werden braucht. Wenn die Kupplungshälften 1, 2 miteinander gekuppelt sind (Fig 1), stoßen die Fluidsperren 6, 7 aneinander und nehmen eine Lage ein, in der sie von ihren Dichtsitzen 19 bzw. 29 abgehoben sind. Bei getrennten Kupplungshälften (Fig. 2) liegen die Fluidsperren 6 bzw. 7 an ihren Dichtsitzen 19 bzw. 29 an und sperren ihre zugehörige Leitung ab.

Die neue Nottrennkupplung kann nach einem Auslösevorgang leicht wieder zusammengebaut werden. Man dreht die Stellschrauben 50 einwärts und schwenkt die Rasthebel 3 dadurch in eine Stellung, in der die Rastnasen 32a die Stellung eines geöffneten Kupplungsmaules einnehmen. Dadurch kann der Endflansch oder Bund 21 der zweiten Kupplungshälfte 2 in dieses geöffnete Maul behinderungsfrei hineingeschoben werden. Dabei kann man sich Führungsstangen (nicht gezeichnet) bedienen, die durch die Ösen 13, 23 geschoben werden und mit Spanngewinde versehen sind, um die beiden Kupplungshälften zusammen zu führen. Wenn die beiden Kupplungsteile 1, 2 ihre richtige Stellung zueinander eingenommen haben, werden die Stellschrauben 50 nach außen gedreht, so dass die Rasthebel 3 ihre Raststellung einnehmen können, in der die Rastnasen 32a hinter die Schrägflächen 21a greifen.

Wenn die beiden Kupplungshälften 1,2 miteinander gekuppelt sind und eine Zugkraft zwischen den Kupplungshälften auftritt, die größer als die Auslösekraft der Kupplung ist, dann werden die Hebel 3 entgegen der Kraft der Druckfedern 4 um die Schwenkpunkte 5 geschwenkt und die Rastnasen 32a kommen von den Schrägflächen 21a frei. Die beiden gekuppelten Leitungen trennen sich zerstörungsfrei. Mit der Trennung der Kupplungshälften voneinander werden auch die Fluidsperren 6, 7 automatisch wirksam und sperren ihre jeweilige Leitung an den zugehörigen Endflanschen 19, beziehungsweise 29, ab.

Die Kupplungshälften können erneut zusammengefügt werden, wie beschrieben.

Die Erfindung betrifft somit eine Nottrennkupplung zwischen zwei Leitungen. Die erste Kupplungshälfte 1 besitzt ein Öffnungsmaul, gebildet durch Rastnasen 32a der kurzen Hebelarme 32 von zweiarmigen Rasthebeln 3, die durch Druckfedern 4 in Schließrichtung vorgespannt sind und dabei hinter Schrägflächen 21a eines Endflansches 21 der zweiten Kupplungshälfte 2 greifen. Beim Überschreiten einer vorgegebenen Zugkraft auf die Leitungen löst sich die Nottrennkupplung.

## Patentansprüche

1. Nottrennkupplung zur Nottrennung zweier Leitungen, umfassend:
- eine erste Kupplungshälfte (1), die ein erstes rohrförmiges, einen Außenumfang bildendes und mit einem Ende versehendes Gehäuse (10) aufweist und ein erstes Leitungsende mit einer ersten selbstschließenden Fluidsperre (6) bildet,
- eine zweite Kupplungshälfte (2), die ein zweites rohrförmiges, einen Außenumfang bildendes und mit einem Ende versehenes Gehäuse (20) aufweist und ein zweites Leitungsende mit einer zweiten selbstschließenden Fluidsperre (7) bildet,
- zwei oder mehrere Hebel, die an Schwenkstellen gelagert sind, einen längeren Hebelarm (31) und einen kürzeren Hebelarm (32) aufweisen, wobei jeder längere Hebelarm (31) durch eine zugehörige Druckfeder (4) in Schwenkrichtung radial nach außen gedrängt wird und der kürzere Hebelarm (32) mit seinem Ende in Schwenkrichtung radial nach innen gedrängt wird, um die gekuppelten Kupplungshälften an den Enden des ersten, rohrförmigen Gehäuses (10) und des zweiten, rohrförmigen Gehäuses (20) zusammenzuhalten, **dadurch gekennzeichnet,**
- **dass** die erste Kupplungshälfte (1) bei dem Ende des ersten, rohrförmigen Gehäuses (10) einen ersten Endflansch oder Bund (11) aufweist, der eine Schrägfläche (11a) und bei dieser eine Lagermulde aufweist die einer am jeweiligen Hebel angebrachten Wälzkörper-Schwenkfläche (30) zugeordnet ist,
- **dass** die zweite Kupplungshälfte (2) bei dem Ende des zweiten, rohrförmigen Gehäuses (20) einen zweiten, mit Schrägflächen (21a) versehenen Endflansch oder Bund (21) aufweist,
- **dass** jeder Hebel zwei Schwenkstellen aufweist, wovon die erste Schwenkstelle als ein Schwenkpunkt (5) ausgebildet ist, der eine Frontfläche einer Stellschraube (50) bildet, und die zweite Schwenkstelle als die Lagermulde angrenzend zur Schrägfläche (11a) des ersten Endflansches oder Bundes (11) ausgebildet ist, wobei die am jeweiligen Hebel angebrachte Wälzkörper-Schwenkfläche (30) der Lagermulde zugeordnet ist,
- **dass** jeder Hebel am kürzeren Hebelarm (32) als ein mit einer Rastnase (32a) versehener Rasthebel (3) ausgebildet ist und hinter die Schrägfläche (21a) des Endflansches oder Bundes (21) der zweiten Kupplungshälfte eingreift, und
- **dass** die Nottrennkupplung so ausgebildet ist, dass wegen der Schrägflächen (21a), der Kraft der Druckfedern (4) und der Hebelarme der Rasthebel (3) bei einer übermäßig großen Zugkraft in Trennrichtung der Kupplungshälften (1, 2) die jeweiligen kürzeren Hebelarme (32) der Rasthebel (3) radial nach außen gegen die Kräfte der an den jeweiligen längeren Hebelarmen wirksamen Druckfedern (4)schwenkten und die Rastnasen (32) dabei die Endflansche oder Bunde (11, 21) freigeben,
wobei die Kupplungshälften sich voneinander lösen.

2. Kupplungsvorrichtung nach Anspruch 1,
wobei die aneinander liegenden Endflansche oder Bunde (11, 21) einen gemeinsamen radialen Rand der Nottrennkupplung bilden und der kürzere Hebelarm (32) der Rasthebel (3) diesen gemeinsamen, radialen Rand umgreift.

3. Kupplungsvorrichtung nach Anspruch 1 oder 2,
wobei die als erste Schwenkstellen ausgebildeten Schwenkpunkte (5) an einem ringförmigen Gehäuseteil (17) angeordnet sind.

4. Kupplungsvorrichtung nach einem der Ansprüche 1 bis 3,
wobei nach Niederdrücken der längeren Hebelarme (31) und Schwenken der Rasthebel (3) um ihre Wälzkörper-Schwenkfläche (30) die kürzeren Hebelarme (32) ein geöffnetes Kupplungsmaul bilden.

5. Kupplungsvorrichtung nach Anspruch 3,
wobei die Stellschrauben (50) in radialer Richtung in dem ringförmigen Gehäuseteil (17) verschraubbar sind, um auf die längeren Hebelarme (31) zur Einwirkung gebracht zu werden und um die Druckfedern (4) zusammenzudrücken und so als Montagehilfe beim Zusammenbau der Nottrennkupplung nützlich zu sein.

6. Kupplungsvorrichtung nach einem der Ansprüche 1 bis 5,
wobei der erste Endflansch oder Bund (11) mit einer Konusfläche als Schrägfläche (11a) versehen ist, die von innen nach außen gesehen, in Gegenrichtung zu einer Konusfläche als Schrägfläche (21a) des zweiten Endflansches oder Bunds (21) geneigt ist, und wobei die Rasthebel (3) zwischen Wälzkörper-Schwenkfläche (30) und Rastnase (32a) konform zu dem radialen Rand der aneinander liegenden Endflansche oder Bunde (11, 21) ausgebildet sind.

7. Kupplungsvorrichtung nach einem der Ansprüche 1 bis 6,
wobei die erste Kupplungshälfte (1) einen Gehäuseflansch (14) mit radialen Führungen (16) für die Enden der längeren Hebelarme (31) der Rasthebel (3) aufweist.

8. Kupplungsvorrichtung nach Anspruch 7,
wobei der Gehäuseflansch (14) mit Aussparungen (15) zur Aufnahme der Druckfedern (4) versehen ist.

9. Kupplungsvorrichtung nach einem der Ansprüche 3 bis 8,
wobei das Gehäuseteil (17) über Streben (18) mit dem Körper des Gehäuses (10) oder mit dem Gehäuseflansch (14) verbunden ist.

10. Kupplungsvorrichtung nach einem der Ansprüche 1 bis 9,
wobei eine Zentrier- und Abdichteinrichtung (8) durch eine Aussparung (81) und einer darin angeordneten Dichtung (80) in einer Kupplungshälfte sowie durch einen Fortsatz (82) an der anderen Kupplungshälfte gebildet wird.

11. Kupplungsvorrichtung nach einem der Ansprüche 1 bis 9,
wobei die erste und die zweite Kupplungshälfte (1, 2) je einen Anschlussflansch (12; 22) für weiterführende Leitungen aufweisen.

12. Kupplungsvorrichtung nach Anspruch 11,
wobei die beiden Anschlussflansche (12;22) je mit Ösen (13;23) versehen sind, um je eine Führungsstange mit Spanngewinde als Montagehilfe ansetzen zu können.

## Claims

1. A safety breakaway coupling for emergency separation of two lines, comprising:
- a first coupling half (1) comprising a first tubular housing (10) defining an outer periphery and having an end and defining a first line end with a first self-sealing fluid barrier (6);
- a second coupling half (2) comprising a second tubular housing (20) defining an outer periphery and having an end and defining a second line end with a second self-sealing fluid barrier (7);
- two or more levers mounted at pivot points, having a longer lever arm (31) and a shorter lever arm (32), wherein each longer lever arm (31) is urged radially outwards in the pivoting direction, by an associated compression spring (4), and wherein the shorter lever arm (32) is urged radially inwards with its end in the pivoting direction, in order to hold together the coupled coupling halves at the ends of the first tubular housing (10) and the second tubular housing (20); **characterized in that**
- at the end of the first tubular housing (10), the first coupling half (1) has a first end flange or collar (11) having an inclined surface (11a) and a bearing recess adjacent thereto, which is associated with a rolling body pivot surface (30) provided at the respective lever;
- at the end of the second tubular housing (20), the second coupling half (2) has a second end flange or collar (21) having inclined surfaces (21a);
- each lever has two pivot points, of which the first pivot point is a fulcrum (5) which is defined by a front surface of an adjusting screw (50), and the second pivot point is the bearing recess adjacent to the inclined surface (11a) of the first end flange or collar (11), wherein the rolling body pivot surface (30) provided on the respective lever is associated with the bearing recess;
- the shorter lever arm (32) of each lever is in the form of a locking lever (3) provided with a detent lug (32a) and engages behind the inclined surface (21a) of the end flange or collar (21) of the second coupling half; and that
- the breakaway coupling is configured so that by virtue of the inclined surfaces (21a), the force of the compression springs (4) and of the lever arms of the locking levers (3), in the event of an excessive tensile force in the separation direction of the coupling halves (1, 2) the respective shorter lever arms (32) of the locking levers (3) will pivot radially outwards against the forces of the respective compression springs (84) acting on the respective longer lever arms, so that the detent lugs (32) release the end flanges or collars (11, 21), whereby the coupling halves separate from each other.

2. The coupling device according to claim 1,
wherein the end flanges or collars (11, 21) abutting on each other form a common radial edge of the safety breakaway coupling and the shorter lever arm (32) of the locking levers (3) embraces this common radial edge.

3. The coupling device according to claim 1 or 2,
wherein the fulcrums defining the first pivot points (5) are arranged on an annular housing part (17).

4. The coupling device according to any one of claims 1 to 3, wherein after depressing the longer lever arms (31) and pivoting the locking levers (3) about their rolling body pivot surface (30), the shorter lever arms (32) form an open coupling jaw.

5. The coupling device according to claim 3,
wherein the adjusting screws (50) can be screwed into the annular housing part (17) in the radial direction, in order to be caused to act on the longer lever arms (31) and to compress the compression springs (4) so as to be useful as an assembly aid in assembling the safety breakaway coupling.

6. The coupling device according to any one of claims 1 to 5, wherein the first end flange or collar (11) is provided with a conical surface defining the inclined surface (11a), which when viewed from inside to outside is inclined in a direction opposite to a conical surface defining the inclined surface (21a) of the second end flange or collar (21), and wherein between the rolling body pivot surface (30) and the detent lug (32a) the locking levers (3) have a shape conforming to the radial edge of the abutting end flanges or collars (11, 21).

7. The coupling device according to any one of claims 1 to 6, wherein the first coupling half (1) has a housing flange (14) with radial guides (16) for the ends of the longer lever arms (31) of the locking levers (3).

8. The coupling device according to claim 7,
wherein the housing flange (14) is provided with recesses (15) for receiving the compression springs (4).

9. The coupling device according to any one of claims 3 to 8, wherein the housing part (17) is connected to the body of the housing (10) or to the housing flange (14) through struts (18).

10. The coupling device according to any one of claims 1 to 9, wherein a centering and sealing means (8) is defined by a recess (81) with a seal (80) disposed therein in one coupling half and by a projection (82) on the other coupling half.

11. The coupling device according to any one of claims 1 to 9, wherein the first and second coupling halves (1, 2) each have a connecting flange (12; 22) for continuing lines.

12. The coupling device according to claim 11,
wherein the two connecting flanges (12; 22) are each provided with eyelets (13; 23), in order to allow to apply a guide rod with clamping thread as a mounting aid.

## Revendications

1. Raccord à séparation de sûreté pour la séparation de sûreté de deux conduites, comportant :
- une première moitié de raccord (1), qui comprend un premier logement (10) tubulaire formant une périphérie extérieure et pourvu d'une extrémité et qui forme une première extrémité de conduite pourvue d'une première barrièr à fluide (6) à fermeture automatique,
- une deuxième moitié de raccord (2), qui comprend un deuxième logement (20) tubulaire formant une périphérie extérieure et pourvu d'une extrémité et qui forme une deuxième extrémité de conduite pourvue d'une deuxième barrière à fluide (7) à fermeture automatique,
- deux ou plus de deux leviers, qui sont montés en des points de pivotement, présentent un bras de levier plus long (31) et un bras de levier plus court (32), où chaque bras de levier plus long (31) est pressé radialement vers l'extérieur dans la direction de pivotement par un ressort de compression (4) associé et le bras de levier plus court (32) est pressé par son extrémité radialement vers l'intérieur dans la direction de pivotement, afin de maintenir ensemble les moitiés de raccord accouplées aux extrémités du premier logement (10) tubulaire et du deuxième logement (20) tubulaire,
**caractérisé** :
- **en ce que** la première moitié de raccord (1) présente près de l'extrémité du premier logement (10) tubulaire une première bride d'extrémité ou un premier épaulement (11), qui présente une surface inclinée (11a) et, près de celle-ci, une cuvette de support qui est associée à une surface de pivotement de corps roulant (30) appliquée sur le levier respectif,
- **en ce que** la deuxième moitié de raccord (2) présente près de l'extrémité du deuxième logement (20) tubulaire une deuxième bride d'extrémité ou un deuxième épaulement (21) pourvu de surfaces inclinées (21a),
- **en ce que** chaque levier présente deux emplacements de pivotement, parmi lesquels le premier emplacement de pivotement est réalisé sous la forme d'un point de pivotement (5), qui forme une surface frontale d'une vis de réglage (50), et le deuxième emplacement de pivotement est réalisé sous la forme de la cuvette de support de manière adjacente à la surface inclinée (11a) de la première bride d'extrémité ou du premier épaulement (11), où la surface de pivotement de corps roulant (30) appliquée sur le levier respectif est associée à la cuvette de support,
- **en ce que** chaque levier sur le bras de levier plus court (32) est réalisé sous la forme d'un levier à encliquetage (3) pourvu d'un tenon d'encliquetage (32a) et s'insère derrière la surface inclinée (21a) de la bride d'extrémité ou de l'épaulement (21) de la deuxième moitié de raccord, et
- **en ce que** le raccord à séparation de sûreté est conçu de sorte que, du fait des surfaces inclinées (21a), de la force des ressorts de compression (4) et des bras de levier des leviers à encliquetage (3), lorsqu'une force de traction est excessivement grande dans la direction de séparation des moitiés de raccord (1, 2), les bras de levier plus courts (32) respectifs des leviers à encliquetage (3) pivotent radialement vers l'extérieur à l'encontre des forces des ressorts de compression (4) agissant sur les bras de levier plus longs respectifs et les tenons d'encliquetage (32) libèrent ce faisant les brides d'extrémité ou les épaulements (11, 21),
dans lequel les moitiés de raccord se détachent l'une de l'autre.

2. Dispositif de raccordement selon la revendication 1, dans lequel les brides d'extrémité ou épaulements (11, 21) situés l'un contre l'autre forment un bord radial commun du raccord à séparation de sûreté et le bras de levier plus court (32) des leviers à encliquetage (3) entoure ce bord radial commun.

3. Dispositif de raccordement selon la revendication 1 ou 2, dans lequel les points de pivotement (5) réalisés sous la forme de premiers emplacements de pivotement sont situés sur une partie de logement (17) annulaire.

4. Dispositif de raccordement selon l'une quelconque des revendications 1 à 3, dans lequel, après qu'une pression vers le bas a été exercée sur les bras de levier plus longs (31) et que les leviers à encliquetage (3) ont pivoté autour de leur surface de pivotement de corps roulant (30), les bras de levier plus courts (32) forment une mâchoire de raccordement ouverte.

5. Dispositif de raccordement selon la revendication 3, dans lequel les vis de réglage (50) peuvent être vissées dans la direction radiale dans la partie de logement (17) annulaire, afin d'être amenées à agir sur les bras de levier plus longs (31) et afin de comprimer les ressorts de compression (4) et ainsi de servir d'aide au montage lors de l'assemblage du raccord à séparation de sûreté.

6. Dispositif de raccordement selon l'une quelconque des revendications 1 à 5, dans lequel la première bride d'extrémité ou le premier épaulement (11) est pourvu d'une surface conique comme surface inclinée (11a), qui est inclinée, vue de l'intérieur vers l'extérieur, dans la direction opposée à celle d'une surface conique comme surface inclinée (21a) de la deuxième bride d'extrémité ou du deuxième épaulement (21), et dans lequel les leviers à encliquetage (3) entre la surface de pivotement de corps roulant (30) et le tenon à encliquetage (32a) sont réalisés de manière conforme au bord radial des brides d'extrémité ou des épaulements (11, 21) situés les uns contre les autres.

7. Dispositif de raccordement selon l'une quelconque des revendications 1 à 6, dans lequel la première moitié de raccord (1) comprend une bride de logement (14) pourvue de guidages radiaux (16) pour les extrémités des bras de levier plus longs (31) des leviers à encliquetage (3).

8. Dispositif de raccordement selon la revendication 7, dans lequel la bride de logement (14) est pourvue d'évidements (15) pour le logement des ressorts de compression (4).

9. Dispositif de raccordement selon l'une quelconque des revendications 3 à 8, dans lequel la partie de logement (17) est reliée au corps du logement (10) ou à la bride de logement (14) par l'intermédiaire d'entretoises (18).

10. Dispositif de raccordement selon l'une quelconque des revendications 1 à 9, dans lequel un dispositif de centrage et d'étanchéité (8) est formé par un évidement (81) et un joint (80) agencé dans celui-ci, dans une moitié de raccord, ainsi que par un prolongement (82) sur l'autre moitié de raccord.

11. Dispositif de raccordement selon l'une quelconque des revendications 1 à 9, dans lequel la première et la deuxième moitié de raccord (1, 2) présentent chacune une bride de connexion (12 ; 22) pour des conduites se poursuivant.

12. Dispositif de raccordement selon la revendication 11, dans lequel les deux brides de connexion (12 ; 22) sont chacune pourvues d'oeillets (13 ; 23), afin de pouvoir fixer une barre de guidage respective pourvue d'un filet de serrage comme aide au montage.
